# EUROPEAN PATENT SPECIFICATION

(11) **EP 3 203 302 B1**
(45) Date of publication and mention of the grant of the patent: **15.08.2018**
(21) Application number: 17150989.6
(22) Date of filing: 11.01.2017
(51) Int. Cl.: G02B 27/01, B60K 35/00, B60R 1/00

(54) **HEAD-UP DISPLAY APPARATUS**
HEADUP-ANZEIGEVORRICHTUNG
APPAREIL D'AFFICHAGE TÊTE HAUTE

(30) Priority: 04.02.2016 JP 2016020033
(43) Date of publication of application: 09.08.2017
(73) Proprietor: Hyundai Mobis Co., Ltd., Seoul 135-977 (KR)
(72) Inventor: Tsutomu, Tatekawa, Iwaki-city, Fukushima (JP); Takehide, Yamano, Iwaki-city, Fukushima (JP)
(74) Representative: dompatent von Kreisler Selting Werner - Partnerschaft von Patent- und Rechtsanwälten mbB

(56) References cited:
- WO-A1-2012/169557
- WO-A1-2014/162477
- US-A1- 2014 368 097

## Description

The present invention relates to a head-up display apparatus that displays vehicle information or navigation information to a driver by using a combiner.

A known head-up display apparatus (hereinafter referred to as an HUD apparatus) includes a combiner and a light-emitting unit that are accommodated behind a dashboard. When the HUD apparatus is in use, the combiner is disposed so as to project from the top surface of the dashboard, and is irradiated with display light emitted from the light-emitting unit, so that a virtual image is displayed on the combiner while the combiner is arranged to be closer to the driver than the windshield is.

JP 2012-254707 A discloses an example of such an HUD apparatus. In this apparatus, a casing that houses a combiner and a light-emitting unit includes a top surface having an opening that enables the combiner to move out of and into the casing. When the apparatus is not in use, the opening is closed by two covers. When the apparatus is in use, the two covers are rotated in the opposite directions, that is, forward (toward a windshield) and rearward (toward a driver), and are accommodated in the casing, so that the opening opens. The combiner is moved so as to project upward from the casing through the opening. In this state, the combiner is irradiated with display light from the light-emitting unit through the opening.

JP 2014-201104 A proposes another example of an HUD apparatus. In this apparatus, an opening formed in a top surface of a casing can be opened and closed by two covers. When the HUD apparatus is used, the two covers are rotated forward in such a manner that the area in which the covers overlap increases, and are accommodated in the casing. Then, a combiner is moved so as to project upward from the casing through the opening that has opened as a result of the rotation of the covers. In this state, the combiner is irradiated with display light from a light-emitting unit through the opening.

In the HUD apparatus according to JP 2012-254707 A, the two covers rotate in the opposite directions, that is, forward and rearward, to open the opening. Therefore, the operation of moving the two covers into the casing to open the opening and the operation of moving the combiner out of the casing so that the combiner projects upward through the opening can be performed simultaneously. Thus, when the apparatus is to be used, the combiner can be moved out of the casing so as to project upward in a short time. Unfortunately, since one of the covers needs to be rotated rearward (toward the driver) and accommodated in the casing to open the opening, the design flexibility of the lower rear section of the casing is considerably reduced. In addition, the cover interferes with the installation space for instruments, such as a speedometer, that are disposed in front of the driver's seat.

In the HUD apparatus according to JP 2014-201104 A, one of the two covers slides under the other cover while the two covers rotate forward to open the opening. Therefore, the overall size of the apparatus is not increased in the front-rear direction. However, the combiner cannot be moved so as to project upward from the casing until the two covers that rotate forward has passed the path along which the combiner moves. Therefore, a long time is required to raise the combiner so that the combiner projects upward from the casing when the apparatus is used.

An object of the present invention is to provide a head-up display apparatus in which the time required to raise the combiner can be reduced, in which the design flexibility of the lower rear section can be increased, and in which interference with other instruments can be prevented.

The invention relates to a head-up display apparatus according to claim 1. Embodiments are disclosed in the dependent claims.

A head-up display apparatus according to an aspect of the present invention includes a casing including a top surface in which a first opening and a second opening are formed continuously from a front side toward a rear side; a combiner capable of moving between an accommodated position in the casing and a projecting position at which the combiner projects upward through the first opening; a light-emitting unit that irradiates the combiner at the projecting position with display light from a light-projecting portion, which is disposed in the casing, through the second opening; a first cover capable of opening and closing the first opening; a second cover capable of opening and closing the second opening; and drive means that operates the combiner, the first cover, and the second cover. The first cover is capable of retracting into the casing by moving forward from a closing position at which the first cover closes the first opening, and the second cover is capable of retracting into a space between the combiner and the light-projecting portion by moving forward from a closing position at which the second cover closes the second opening. The drive means causes the second cover to retract when the combiner is moving from the accommodated position to the projecting position.

In the head-up display apparatus having the above-described structure, the first cover opens and closes the first opening, which is disposed on the path along which the combiner moves, and the second cover opens and closes the second opening, which is disposed on the optical path from the light-projecting portion of the light-emitting unit to the combiner. When the combiner is being moved from the accommodated position to the projecting position, the second cover retracts into the space between the combiner and the light-projecting portion while moving in the same direction as the first cover. Therefore, the combiner and the second cover can be moved simultaneously without causing interference therebetween. Accordingly, the time required to raise the combiner can be reduced. In addition, since both the first cover and the second cover are moved forward and accommodated in the casing, the design flexibility of the lower rear section can be increased and interference with other instruments can be prevented.

In the above-described structure, preferably, the drive means includes a motor and a transmission mechanism, the motor is disposed on the front side of the accommodated position of the combiner, the second cover is disposed on the rear side of the accommodated position of the combiner in a swingable manner, and the transmission mechanism is disposed at a side of the combiner so as to extend from the front side toward the rear side of the accommodated position of the combiner, and transmits power of the motor to the second cover.

In addition, in the above-described, preferably, when the combiner has been moved to the projecting position, at least a portion of the second cover is inserted a space that is occupied by the combiner when the combiner is at the accommodated position. In such a case, the second cover can be accommodated in the casing at a location near the accommodated position of the combiner. Accordingly, the space of the lower rear section of the casing can be reduced.

According to the head-up display apparatus of the present invention, the time required to raise the combiner can be reduced. In addition, the design flexibility of the lower rear section can be increased, and interference with other devices can be prevented.

### BRIEF DESCRIPTION OF THE DRAWINGS

Fig. 1 is a perspective view of a head-up display apparatus according to an embodiment of the present invention in an unused state;
Fig. 2 is a sectional view of the head-up display apparatus in the unused state;
Fig. 3 is a perspective view of the head-up display apparatus in a used state;
Fig. 4 is a sectional view of the head-up display apparatus in the used state;
Fig. 5 is a perspective view of the head-up display apparatus illustrated in Fig. 1 from which a casing is removed;
Fig. 6 is a perspective view illustrating the main parts of a combiner and an opening-closing mechanism for a second cover included in the head-up display apparatus;
Fig. 7 is a diagram illustrating the main part of a driving mechanism included in the head-up display apparatus;
Fig. 8 is a diagram illustrating the state in which the combiner is accommodated;
Fig. 9 is a diagram illustrating the state in which an operation of raising the combiner is started;
Fig. 10 is a diagram illustrating the state in which the operation of raising the combiner is being performed;
Fig. 11 is a diagram illustrating the state in which the operation of raising the combiner is completed; and Fig. 12 is a diagram illustrating a tilting movement of the combiner.

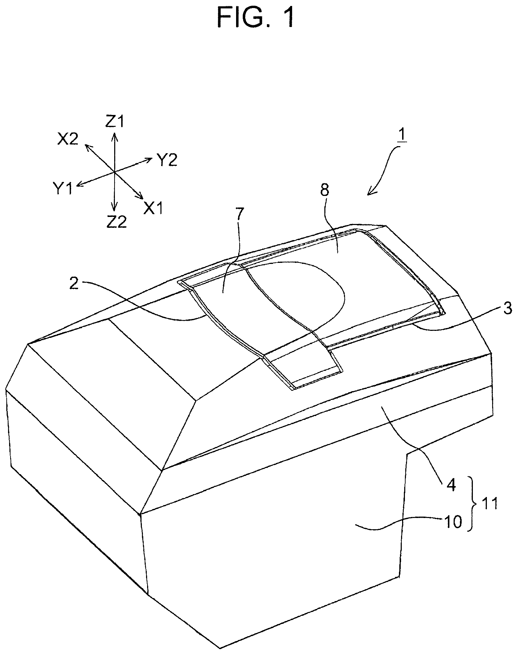

Embodiments of the present invention will be described with reference to the drawings. A head-up display apparatus 1 (hereinafter referred to as HUD apparatus 1) according to an embodiment is disposed on a dashboard in front of the driver's seat in a vehicle cabin. The HUD apparatus 1 is a display apparatus that displays, for example, vehicle information or navigation information. In the following description, the direction indicated by arrow Y1-Y2 in Fig. 1 is defined as the front-rear direction, the direction indicated by arrow X1-X2 as the left-right direction, and the direction indicated by arrow Z1-Z2 as the vertical direction.

The HUD apparatus 1 includes an upper case 4 including a top surface having first and second openings 2 and 3; a combiner 5 that is accommodated in the upper case 4 and capable of projecting upward through the first opening 2; a light-emitting unit 6 that is accommodated in the upper case 4 and capable of emitting display light to the outside through the second opening 3; a first cover 7 capable of opening and closing the first opening 2; a second cover 8 capable of opening and closing the second opening 3; and a driving mechanism 9 that operates the combiner 5, the first cover 7, and the second cover 8. The HUD apparatus 1 is a pop-up apparatus in which the combiner 5 is accommodated in the upper case 4 in an unused state and is moved out of the upper case 4 so as to project upward in a used state.

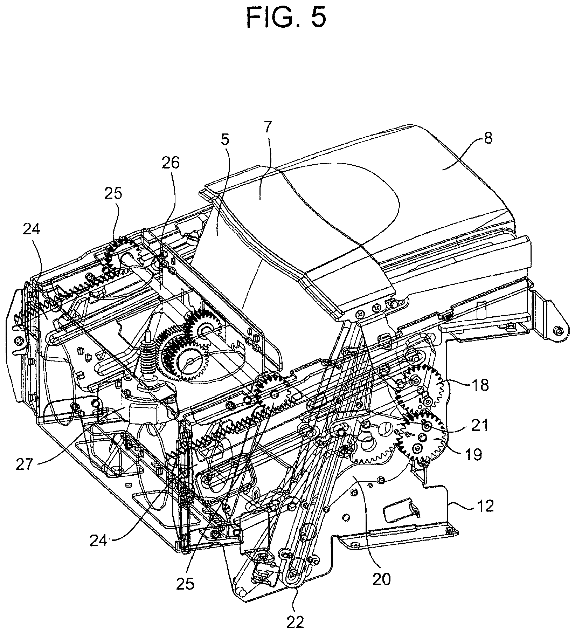

The upper case 4 is combined with a lower case 10 to form a hollow casing 11. As illustrated in Fig. 5, a housing-shaped chassis 12 is disposed in the casing 11. The casing 11 is disposed in a recess formed in the dashboard in such a manner that the top surface of the upper case 4 is exposed. The casing 11 is oriented so that the second opening 3 faces the driver's seat and the first opening 2 faces the front (windshield).

The first opening 2 is disposed on the path along which the combiner 5 moves. The second opening 3 is disposed on the optical path from a light-projecting portion of the light-emitting unit 6, which will be described below, to the combiner 5 in a projecting state. The first opening 2 and the second opening 3 are rectangular cuts having a common side that are formed continuously from the front side toward the rear side. The first opening 2 has an elongated shape such that the length thereof in the left-right direction is much longer than the length thereof in the front-rear direction. The length of the second opening 3 in the left-right direction is somewhat shorter than that of the first opening 2.

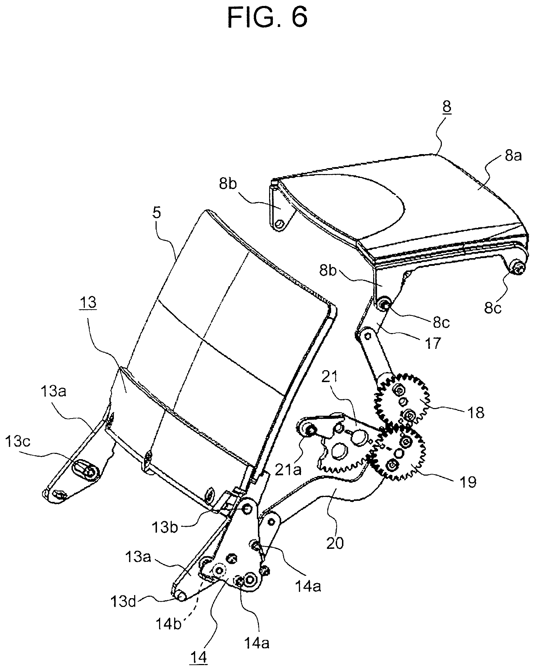

The combiner 5 is a display panel unit including a half mirror, and has the shape of a transparent rectangular plate that is gradually curved toward the front. As illustrated in Fig. 6, a support member 13 is fixed to the bottom portion of the combiner 5, and legs 13a project from the left and right end portions of the support member 13. Each leg 13a includes a shaft 13b, a long hole 13c, and a projection 13d, and an operation plate 14 is rotatably connected to the shaft 13b. A pair of guide pins 14a are provided on the outer surface of the operation plate 14, and a connecting pin 14b is provided on the inner surface of the operation plate 14. The connecting pin 14b is inserted in the long hole 13c in the leg 13a, and the relative angle between the support member 13 and the operation plate 14 is regulated within a range in which the connecting pin 14b is movable in the long hole 13c.

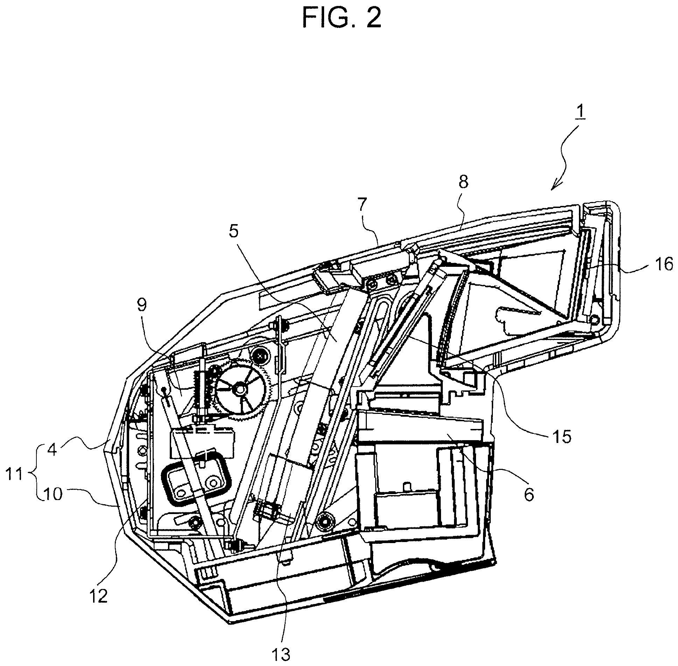

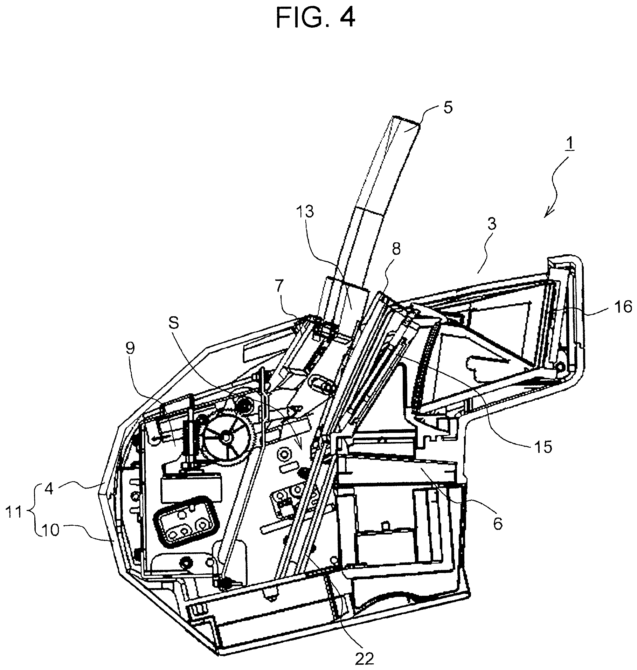

As illustrated in Fig. 2, the light-emitting unit 6 is disposed in a lower rear section of the chassis 12. The display light emitted from the light-emitting unit 6 is reflected by a first mirror 15, which is disposed in front of and below the second opening 3, and travels toward a second mirror 16, which is disposed behind and below the second opening 3. The second mirror 16 corresponds to the light-projecting portion of the light-emitting unit 6. As described in detail below, referring to Fig. 4, when the combiner 5 is at the projecting position, the display light from the light-emitting unit 6 reflected by the second mirror 16 (light-projecting portion) passes through the second opening 3 and reaches the combiner 5.

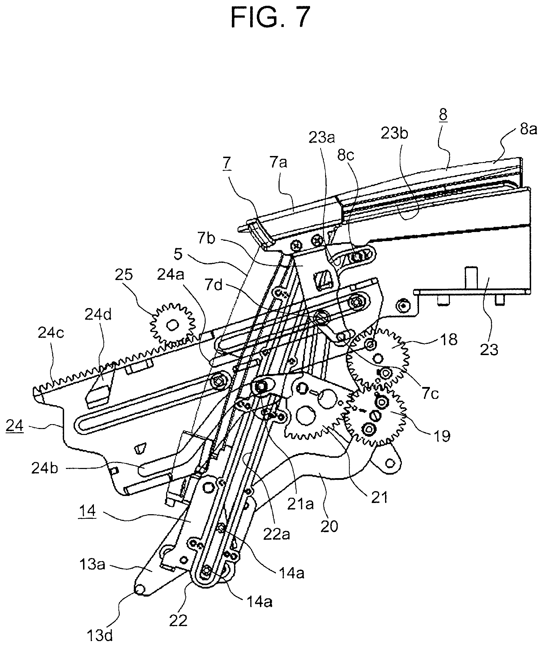

As illustrated in Fig. 7, the first cover 7 includes a lid 7a having substantially the same shape as the first opening 2. Legs 7b project from the left and right end portions of the lid 7a, and each leg 7b has a guide pin 7c at the distal end thereof. The first cover 7 is supported by the chassis 12 so as to be rotatable around a shaft 7d provided on each leg 7b. The guide pin 7c is inserted in a cam hole formed in a corresponding one of drive plates, which will be described below.

As illustrated in Fig. 6, the second cover 8 includes a lid 8a having substantially the same shape as the second opening 3. Four guide pins 8c are provided on legs 8b that project from four corners of the lid 8a. Link arms 17 are rotatably connected to the front legs 8b of the second cover 8. Each link arm 17 is fixed to a relay gear 18 having a shaft that is supported by a side portion of the chassis 12. Another relay gear 19 meshes with the relay gear 18. A link arm 20, which is fixed to the relay gear 19, is rotatably connected to the corresponding operation plate 14. In addition, a sector gear 21 meshes with the relay gear 19, and a guide pin 21a is provided on the sector gear 21.

Referring to Fig. 7, first guide members 22 and second guide members 23 are attached to left and right side portions of the chassis 12. Each first guide member 22 has a guide hole 22a that extends obliquely, and the guide pins 14a on the corresponding operation plate 14 are inserted in the guide hole 22a in a movable manner. A pair of guide holes 23a and 23b are formed in each of the second guide members 23. Each of the front guide pins 8c of the second cover 8 is inserted in the corresponding guide hole 23a in a movable manner, and each of the rear guide pins 8c of the second cover 8 is inserted in the corresponding guide hole 23b in a movable manner.

Drive plates 24 are supported by the left and right side portions of the chassis 12 so as to be movable in the front-rear direction. The drive plates 24 are disposed at the sides of the combiner 5 so as to extend from the front side toward the rear side of the accommodated position of the combiner 5. Each drive plate 24 has two cam holes 24a and 24b. The guide pins 7c at the distal ends of the legs 7b of the first cover 7 are inserted in the upper cam holes 24a in a movable manner, and the guide pins 21a on the sector gears 21 are inserted in the lower cam holes 24b in a movable manner.

Accordingly, when the drive plates 24 move in the front-rear direction, the guide pins 7c slide along the upper cam holes 24a, so that the first cover 7 rotates around the shafts 7d, thereby opening or closing the first opening 2. In addition, when the drive plates 24 move in the front-rear direction, the guide pins 21a of the sector gears 21 move along the lower cam holes 24b. As each sector gear 21 rotates, the two corresponding relay gears 18 and 19 rotate in the opposite directions. The rotation of one relay gear 18 is transmitted to the second cover 8 through the corresponding link arm 17, so that the corresponding guide pins 8c of the second cover 8 move along the guide holes 23a and 23b in the corresponding second guide member 23. Accordingly, the second cover 8 rotates to open or close the second opening 3. At the same time, the rotation of the other relay gear 19 is transmitted to the corresponding operation plate 14 through the corresponding link arm 20, so that the guide pin 14a on the operation plate 14 move along the guide hole 22a in the corresponding first guide member 22. Thus, the combiner 5, which is connected to the operation plate 14, can be moved between the inside of the casing 11 and the outside of the first opening 2.

Racks 24c are formed on the top surfaces of the drive plates 24, and gears 25 mesh with the racks 24c. As illustrated in Fig. 5, the gears 25 are fixed to a synchronizing shaft 26, which extends in the left-right direction of the chassis 12, at both ends of the synchronizing shaft 26. When the synchronizing shaft 26 is rotated by a motor 27, which is disposed in a lower front section of the chassis 12 and serves as a drive source, the pair of left and right drive plates 24 move in the front-rear direction. Pressing projections 24d are formed on upper portions of the drive plates 24. As described in detail below, when the drive plates 24 are further moved after the completion of the operation of raising the combiner 5, the pressing projections 24d come into contact with the projections 13d and rotate the support member 13 so that the combiner 5 is tilted. The motor 27, the gears 25, the drive plates 24, the sector gears 21, the relay gears 18 and 19, the link arms 17 and 20, the operation plates 14, and other components constitute a driving mechanism 9 (driving means) for operating the combiner 5, the first cover 7, and the second cover 8. The drive plates 24, the sector gears 21, the relay gears 18, the link arms 17, and other components constitute a transmission mechanism that transmits the power of the motor 27 to the second cover 8.

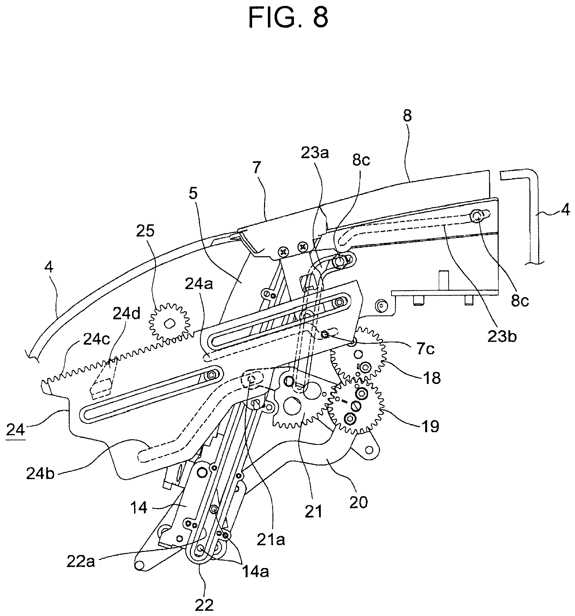

The operation of raising the combiner 5 in the HUD apparatus 1 structured as described above will be described with reference to Figs. 8 to 12.

Figs. 1 and 2 illustrate the HUD apparatus 1 in an unused state. In the unused state, the first opening 2 and the second opening 3 formed in the top surface of the upper case 4 are respectively closed by the first cover 7 and the second cover 8, and the combiner 5 is retained at an accommodated position in the casing 11. In this state, as illustrated in Fig. 8, each drive plate 24 is stationary at an advance position, which is at the left end in Fig. 8. The guide pin 7c of the first cover 7 engages with a right end portion of the upper cam hole 24a in Fig. 8, and the guide pin 21a of the sector gear 21 engages with a right end portion of the lower cam hole 24b in Fig. 8. The guide pins 14a of the operation plate 14 engage with a bottom end portion of the guide hole 22a in the first guide member 22, and the combiner 5 is stationary at the accommodated position at the bottom.

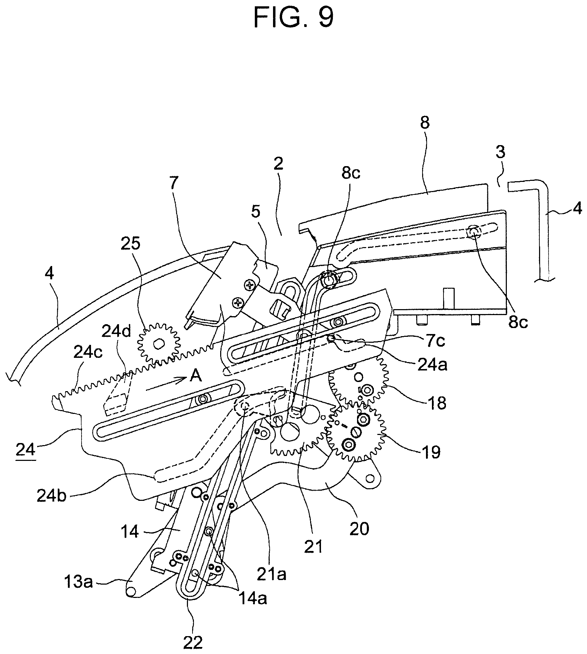

When the motor 27 is rotated in the forward or reverse direction in this state, the rotation of the motor 27 is transmitted to the gear 25 through the synchronizing shaft 26. Accordingly, the drive plate 24 starts to move rightward (direction of arrow A) in Fig. 9 from the advance position toward a retreat position. As a result, as illustrated in Fig. 9, the guide pin 7c of the first cover 7 moves to an inclined portion of the upper cam hole 24a, so that the first cover 7 rotates forward around the shaft 7d and is accommodated in the upper case 4. Accordingly, the first opening 2 opens.

In addition, when the drive plate 24 starts to move toward the retreat position as described above, the guide pin 21a of the sector gear 21 moves to an inclined portion of the lower cam hole 24b. Accordingly, the sector gear 21 rotates counterclockwise in Fig. 9 so that the pair of relay gears 18 and 19 rotate in the opposite directions. As a result, the movement of the link arm 20, which is fixed to the relay gear 19, is transmitted to the operation plate 14, and the guide pins 14a of the operation plate 14 move upward from the bottom end portion of the guide hole 22a in the first guide member 22. Accordingly, the combiner 5, which is connected to the operation plate 14, starts to move upward from the accommodated position toward the first opening 2. At the same time, the movement of the link arm 17, which is fixed to the relay gear 18, is transmitted to the second cover 8, and the guide pins 8c of the second cover 8 move leftward from the right end portions of the guide holes 23a and 23b in the second guide member 23 in Fig. 9. Accordingly, the second cover 8 moves into the upper case 4 while rotating forward, and the rear end portion of the second opening 3 gradually opens.

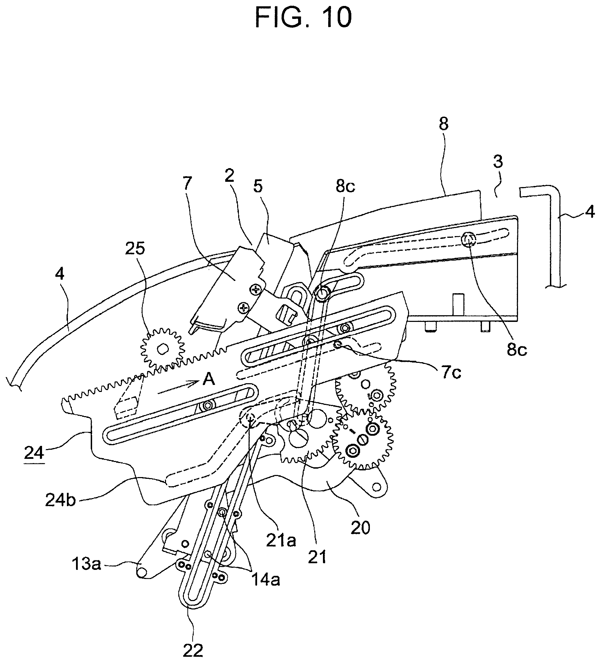

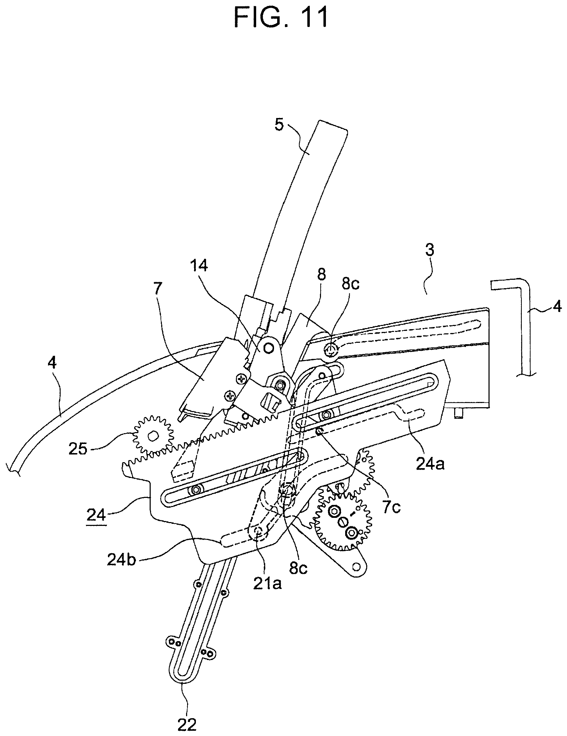

When the drive plate 24 further moves toward the retreat position, as illustrated in Fig. 10, the combiner 5 starts to project upward from the upper case 4 through the first opening 2, and the second cover 8 moves into the upper case 4. When the motor 27 is stopped at the time when the drive plate 24 reaches the retreat position, as illustrated in Fig. 11, the combiner 5 is retained at a position where the entirety thereof projects from the first opening 2, and the second cover 8 is accommodated in the upper case 4 so that the second opening 3 is fully open. At this time, the operation of raising the combiner 5 is completed.

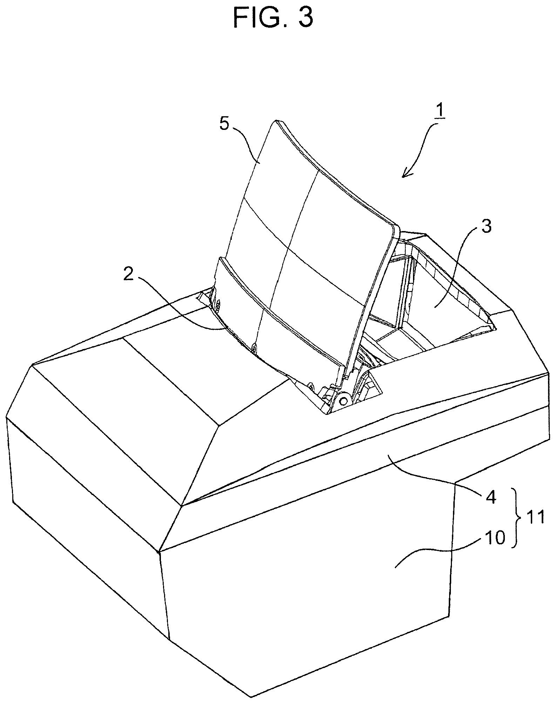

Figs. 3 and 4 illustrate the HUD apparatus 1 in a used state after the completion of the operation of raising the combiner 5. In the used state, when display light is emitted from the light-emitting unit 6, the display light is reflected by the first mirror 15 and the second mirror 16, passes through the second opening 3, and reaches the combiner 5. At this time, as is clear from Fig. 4, the first cover 7 is stationary at a position in front of the path along which the combiner 5 moves, and the second cover 8 is stationary in the state in which a front end portion thereof is in a space S that is occupied by the combiner 5 when the combiner 5 is at the accommodated position.

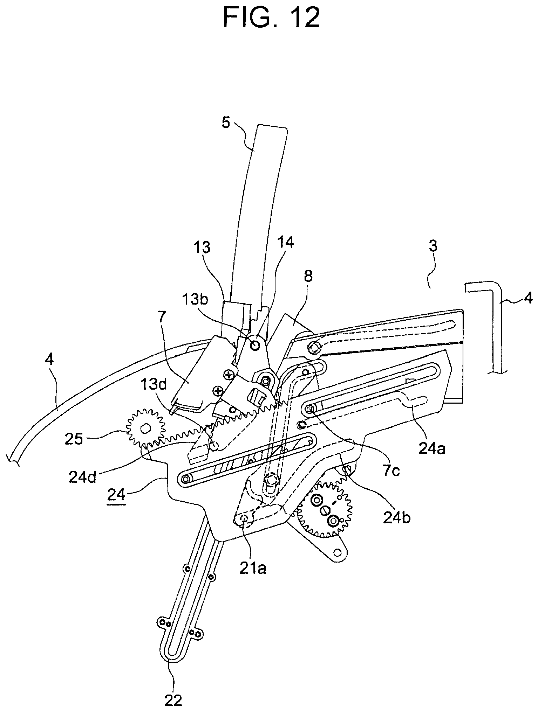

This HUD apparatus 1 has a tilting function for adjusting the orientation of the combiner 5 retained at the projecting position. More specifically, when the drive plate 24 is moved further rightward from the retreat position illustrated in Fig. 11 after the completion of the operation of raising the combiner 5, as illustrated in Fig. 12, the pressing projection 24d of the drive plate 24 pushes the projection 13d of the support member 13. As a result, the relative angle between the support member 13 and the operation plate 14, which are connected to each other so as to be rotatable around the shaft 13b, changes. Accordingly, the combiner 5, which is integrated with the support member 13, rotates around the shaft 13b, and the orientation of the combiner 5 can be adjusted as desired by the user.

When the combiner 5 in the raised state is to be retracted to the accommodated position in the casing 11, the motor 27 is rotated in the direction opposite to that in the above-described operation, so that the drive plate 24 is moved from the retreat position illustrated in Fig. 11 to the advance position illustrated in Fig. 8.

As described above, in the HUD apparatus 1 according to the present embodiment, the first cover 7 opens and closes the first opening 2, which is disposed on the path along which the combiner 5 moves, and the second cover 8 opens and closes the second opening 3, which is disposed on the optical path from the second mirror 16, that is, the light-projecting portion of the light-emitting unit 6, to the combiner 5. When the combiner 5 is being moved from the accommodated position to the projecting position, the second cover 8 retracts into space between the combiner 5 and the light-projecting portion (second mirror 16) while rotating forward, similarly to the first cover 7. Therefore, the combiner 5 and the second cover 8 can be moved simultaneously without causing interference therebetween, and the time required to raise the combiner 5 can be reduced. In addition, since both the first cover 7 and the second cover 8 rotate forward and are accommodated in the casing 11, it is not necessary to provide an accommodation space for the second cover 8 in a lower rear section of the casing 11. Therefore, the overall size of the apparatus can be reduced in the front-rear direction, and interference with instruments such as a speedometer can be prevented.

In addition, in the present embodiment, when the combiner 5 has been moved to the projecting position, a portion of the second cover 8 is inserted the space S that is occupied by the combiner 5 when the combiner 5 is at the accommodated position. Therefore, the second cover 8 can be accommodated in the casing 11 at a location near the accommodated position of the combiner 5. Accordingly, the space of the lower rear section of the casing 11 can be reduced.

According to the above-described embodiment, the display light from the light-emitting unit 6 is reflected by the first mirror 15 and the second mirror 16, and the second mirror 16 serves as the light-projecting portion for irradiating the combiner 5 with the display light. However, the number of mirrors to be used is not limited to two. For example, the display light from the light-emitting unit 6 may be directed toward the combiner 5 by using only the second mirror 16. Alternatively, the combiner 5 may be directly irradiated with the display light emitted from the light-emitting unit 6 without using a mirror. In such a case, the light-emitting unit 6 serves as the light-projecting portion.

In the above-described embodiment, each sector gear 21, which engages with the lower cam hole 24b of the corresponding drive plate 24, rotates the corresponding pair of relay gears 18 and 19 in the opposite directions. Accordingly, the combiner 5 and the second cover 8 are moved simultaneously in response to the rotation of the relay gears 18 and 19. However, each drive plate 24 may instead have a cam hole for operating the combiner 5 and a cam hole for operating the second cover 8 individually so that the second cover 8 starts to open after the operation of raising the combiner 5 has been started.

## Claims

1. A head-up display apparatus comprising:
a casing (11) including a top surface in which a first opening (2) and a second opening (3) are formed continuously from a front side toward a rear side;
a combiner (5) capable of moving between an accommodated position in the casing (11) and a projecting position at which the combiner (5) projects upward through the first opening (2);
a light-emitting unit (6) that is configured to irradiate the combiner (5) at the projecting position with display light from a light-projecting portion (16), which is disposed in the casing (11), through the second opening (3);
a first cover (7) capable of opening and closing the first opening (2);
a second cover (8) capable of opening and closing the second opening (3); and
drive means (9) that is configured to operate the combiner (5), the first cover (7), and the second cover (8),
**characterized in that** the first cover (7) is capable of retracting into the casing (11) by moving forward from a closing position at which the first cover (7) closes the first opening (2), and the second cover (8) is capable of retracting into a space between the combiner (5) and the light-projecting portion (16) by moving forward from a closing position at which the second cover (8) closes the second opening (3), and
the drive means (9) causes the second cover (8) to retract when the combiner (5) is moving from the accommodated position to the projecting position.

2. The head-up display apparatus according to Claim 1, wherein the drive means (9) includes a motor (27) and a transmission mechanism (24),
wherein the motor (27) is disposed on the front side of the accommodated position of the combiner (5),
wherein the second cover (8) is disposed on the rear side of the accommodated position of the combiner (5) in a swingable manner, and
wherein the transmission mechanism (24) is disposed at a side of the combiner (5) so as to extend from the front side toward the rear side of the accommodated position of the combiner (5), and is configured to transmit power of the motor (27) to the second cover (8).

3. The head-up display apparatus according to Claim 1 or 2, wherein, when the combiner (5) has been moved to the projecting position, at least a portion of the second cover (8) is inserted in a space that is occupied by the combiner (5) when the combiner (5) is at the accommodated position.

## Patentansprüche

1. Headup-Anzeigevorrichtung mit:
einem Gehäuse (11) mit einer oberen Fläche, in der eine erste Öffnung (2) und eine zweite Öffnung (3) kontinuierlich von einer vorderen Seite zu einer hinteren Seite hin ausgebildet sind;
einem Combiner (5), der zur Bewegung zwischen einer in dem Gehäuse (11) aufgenommenen Position und einer vorstehenden Position in der Lage ist, in welcher der Combiner (5) durch die erste Öffnung (2) hindurch nach oben vorsteht;
einer lichtemittierenden Einheit (6), die derart konfiguriert ist, dass sie den Combiner (5) an der vorstehenden Position durch die zweite Öffnung (3) hindurch mit Anzeigelicht aus einem Lichtprojektionsabschnitt (16) bestrahlt, der in dem Gehäuse (11) angeordnet ist;
einer ersten Abdeckung (7), die zum Öffnen und Schließen der ersten Öffnung (2) in der Lage ist;
einer zweiten Abdeckung (8), die zum Öffnen und Schließen der zweiten Öffnung (3) in der Lage ist;
einer Antriebsvorrichtung (9), die zum Betätigen des Combiners (5), der ersten Abdeckung (7) und der zweiten Abdeckung (8) in der Lage ist,
**dadurch gekennzeichnet, dass** die erste Abdeckung (7) in das Gehäuse (11) hinein zurückfahrbar ist, indem sie sich aus einer Schließposition, in der die erste Abdeckung (7) die erste Öffnung (2) schließt, nach vorne bewegt, und die zweite Abdeckung (8) in einen Raum zwischen dem Combiner (5) und dem Lichtprojektionsabschnitt (16) zurückfahrbar ist, indem sie sich aus einer Schließposition, in der die zweite Abdeckung (8) die zweite Öffnung (8) schließt, nach vorne bewegt, und
die Antriebsvorrichtung (9) das Zurückfahren der zweiten Abdeckung (8) bewirkt, wenn sich der Combiner (5) aus der aufgenommenen Position in die vorstehende Position bewegt.

2. Headup-Anzeigevorrichtung nach Anspruch 1, bei der die Antriebsvorrichtung (9) einen Motor (27) und einen Transmissionsmechanismus (24) aufweist,
wobei der Motor (27) an der Vorderseite der aufgenommenen Position des Combiners (5) angeordnet ist,
wobei die zweite Abdeckung (8) schwenkbar an der Rückseite der aufgenommenen Position des Combiners (5) angeordnet ist, und
wobei der Transmissionsmechanismus (24) an einer Seite des Combiners (5) derart angeordnet ist, dass er von der Vorderseite zu der Rückseite der aufgenommenen Position des Combiners (5) hin absteht, und derart konfiguriert ist, dass er die Kraft des Motors (27) auf die zweite Abdeckung (8) überträgt.

3. Headup-Anzeigevorrichtung nach Anspruch 1 oder 2, bei der, wenn der Combiner (5) in die vorstehende Position bewegt worden ist, mindestens ein Abschnitt der zweiten Abdeckung (8) in einen Raum eingeführt ist, den der Combiner (5) einnimmt, wenn sich der Combiner (5) in der aufgenommenen Position befindet.

## Revendications

1. Appareil d'affichage tête haute comprenant :
un boîtier (11) comportant une surface supérieure dans laquelle une première ouverture (2) et une seconde ouverture (3) sont formées en continu depuis un côté avant vers un côté arrière ;
un combineur (5) capable de se déplacer entre une position logée dans le boîtier (11) et une position saillante à laquelle le combineur (5) fait saillie vers le haut à travers la première ouverture (2) ;
une unité électroluminescente (6) qui est configurée pour irradier le combineur (5) à la position saillante avec une lumière d'affichage depuis une portion de projection de lumière (16), qui est disposée dans le boîtier (11), à travers la seconde ouverture (3) ;
un premier couvercle (7) capable d'ouvrir et de fermer la première ouverture (2) ;
un second couvercle (8) capable d'ouvrir et de fermer la seconde ouverture (3) ; et
un moyen d'entraînement (9) qui est configuré pour actionner le combineur (5), le premier couvercle (7) et le second couvercle (8),
**caractérisé en ce que** le premier couvercle (7) est capable de se rétracter dans le boîtier (11) en avançant d'une position de fermeture à laquelle le premier couvercle (7) ferme la première ouverture (2), et le second couvercle (8) est capable de se rétracter dans un espace entre le combineur (5) et la portion de projection de lumière (16) en s'avançant d'une position de fermeture à laquelle le second couvercle (8) ferme la seconde ouverture (3), et
le moyen d'entraînement (9) amène le second couvercle (8) à se rétracter lorsque le combineur (5) se déplace de la position logée à la position saillante.

2. Appareil d'affichage tête haute selon la revendication 1, dans lequel le moyen d'entraînement (9) comporte un moteur (27) et un mécanisme de transmission (24),
dans lequel le moteur (27) est disposé sur le côté avant de la position logée du combineur (5),
dans lequel le second couvercle (8) est disposé sur le côté arrière de la position logée du combineur (5) de manière oscillante, et
dans lequel le mécanisme de transmission (24) est disposé sur un côté du combineur (5) de façon à s'étendre depuis le côté avant vers le côté arrière de la position logée du combineur (5), et est configuré pour transmettre la puissance du moteur (27) au second couvercle (8).

3. Appareil d'affichage tête haute selon la revendication 1 ou 2, dans lequel, lorsque le combineur (5) s'est déplacé à la position saillante, au moins une portion du second couvercle (8) est insérée dans un espace qui est occupé par le combineur (5) lorsque le combineur (5) est à la position logée.
